# EUROPEAN PATENT APPLICATION

(11) **EP 4 672 179 A1**
(43) Date of publication of application: **31.12.2025**
(21) Application number: 25180462.1
(22) Date of filing: 03.06.2025
(51) Int. Cl.: G06V 20/52, G06V 20/60

(54) **DETECTION METHOD AND APPARATUS, DEVICE AND STORAGE MEDIUM**

(30) Priority: 27.06.2024 CN 202410859218
(71) Applicant: Zhejiang Hengyi Petrochemical Co., Ltd., Zhejiang 311200 (CN); Fujian Yijin Chemical Fiber Co., Ltd., Quanzhou City, Fujian 362256 (CN)
(72) Inventor: PENG, Xiantao, Hangzhou, 311200 (CN); WANG, Peng, Hangzhou, 311200 (CN); QIU, Yibo, Hangzhou, 311200 (CN); BAO, Guoliang, Hangzhou, 311200 (CN); LI, Dake, Hangzhou, 311200 (CN); JIN, Junliang, Hangzhou, 311200 (CN); XU, Feng, Hangzhou, 311200 (CN); WANG, Dandan, Hangzhou, 311200 (CN)
(74) Representative: Bittner, Bernhard

(57) **Abstract**

The present disclosure provides detection method and apparatus, an electronic device and a storage medium. The method includes: determining (S101, S301) a target area targeted by a target operation in a case where a target body in video data of a target trolley has the target operation, where the target trolley includes two areas, each of the two areas has N carriers for carrying yarn spindles, the target area is one of the two areas, and N is a positive integer; obtaining (S102, S302) a plurality of target images capable of covering the target area; determining (S103) a target yarn spindle targeted by the target operation based on the plurality of target images; and generating (S103, S307) prompt information for the target yarn spindle.

## Description

### FIELD

The present disclosure relates to the field of data processing technologies, particularly to detection method and apparatus, a device and a storage medium.

### BACKGROUND

In a manufacturing industry of yarn spindles, before packaging, the produced yarn spindles are usually transported by a trolley to a designated area (such as a warehouse) for storage, and after a certain period of storage, the trolley carrying the yarn spindles is transported away from the designated area for a subsequent process such as packaging. During the period of storage, it is necessary to ensure that the yarn spindles on the trolley have not been removed to avoid affecting the subsequent packaging process, but if a yarn spindle is found to be missing when the trolley carrying the yarn spindle departs the designated area, it is necessary to manually inspect the departed trolley to determine specific yarn spindles, which is obviously inefficient.

### SUMMARY

The present disclosure provides detection method and apparatus, a device and a storage medium for solving one or more technical problems in the prior art.

At a first aspect, the present disclosure provides a detection method applied to a cloud, including:
determining a target area targeted by a target operation in a case where a target body in video data of a target trolley has the target operation, where the target trolley includes two areas, each of the two areas has N carriers for carrying yarn spindles, the target area is one of the two areas, and N is a positive integer;
obtaining a plurality of target images capable of covering the target area; and
determining a target yarn spindle targeted by the target operation based on the plurality of target images, and generating prompt information for the target yarn spindle.

At a second aspect, the present disclosure provides a detection apparatus applied to a cloud, including:
an information determination unit configured to determine a target area targeted by a target operation in a case where a target body in video data of a target trolley has the target operation, and obtain a plurality of target images capable of covering the target area, where the target trolley includes two areas, each of the two areas has N carriers for carrying yarn spindles, the target area is one of the two areas, and N is a positive integer;
a detection unit configured to determine a target yarn spindle targeted by the target operation based on the plurality of target images; and
a prompt unit configured to generate prompt information for the target yarn spindle.

At a third aspect, an electronic device is provided, which including:
at least one processor; and
a memory connected in communication with the at least one processor;
the memory stores an instruction executable by the at least one processor, and the instruction, when executed by the at least one processor, enables the at least one processor to execute the method of any one of the embodiments of the present disclosure.

At a fourth aspect, a non-transitory computer-readable storage medium storing a computer instruction thereon is provided, where the computer instruction is used to cause a computer to execute the method of any one of the embodiments of the present disclosure.

At a fifth aspect, a computer program product is provided, which includes a computer program, the computer program, when executed by a processor, implements the method of any one of the embodiments of the present disclosure.

In this way, the solution of the present disclosure can use the obtained plurality of target images to determine the target yarn spindle targeted by the target operation, and then generate the prompt information for the target yarn spindle, so that, compared with an existing manual inspection manner, the solution of the present disclosure does not need to rely on manual labor, may quickly determine specific information of the yarn spindle targeted by the target operation under the case where the target body has the target operation, improves the inspection efficiency, realizes automation and intelligence of whole processes, saves a large number of labor costs and time costs, avoids an impact on the subsequent packaging process, and ensures a normal operation of job shop.

It should be understood that the content described in this part is not intended to identify critical or essential features of embodiments of the present disclosure, nor is it used to limit the scope of the present disclosure. Other features of the present disclosure will be easily understood through the following description.

### BRIEF DESCRIPTION OF THE DRAWINGS

In the accompanying drawings, same or similar components or elements are represented by same reference numerals throughout the accompanying drawings, unless otherwise specified. The accompanying drawings may not necessarily be drawn to scale. It should be understood that the accompanying drawings only depict some embodiments provided according to the present disclosure and should not be considered as limiting the scope of the present disclosure.
FIG. 1 is a first schematic flowchart of a detection method according to an embodiment of the present application;
FIG. 2(a) is a schematic diagram of a target trolley according to an embodiment of the present disclosure;
FIGS. 2(b) and 2(c) are schematic diagrams of different target images according to an embodiment of the present disclosure;
FIG. 3(a) is a second schematic flowchart of a detection method according to an embodiment of the present application;
FIG. 3(b) is a schematic flowchart of obtaining a target mask image corresponding to a target image 1 and having an identification information according to an embodiment of the present application;
FIG. 3(c) is a schematic flowchart of obtaining a target mask image corresponding to a target image 2 and having an identification information according to an embodiment of the present application;
FIG. 4 is a schematic diagram of a model structure of a target detection model according to an embodiment of the present application;
FIG. 5 is a schematic diagram of segmenting a dot prompt image according to an embodiment of the present application;
FIG. 6 is a schematic diagram of a prior feature layer included in a target detection model according to an embodiment of the present application;
FIG. 7 is a schematic diagram of a similar image prior layer included in a semantic prior layer according to an embodiment of the present application;
FIG. 8 is a structure diagram of a detection apparatus according to an embodiment of the present application; and
FIG. 9 is a block diagram of an electronic device for implementing a detection method according to an embodiment of the present application.

### DETAILED DESCRIPTION

Hereinafter the present disclosure is described in further detail below with reference to the accompanying drawings. The same reference numerals in the accompanying drawings indicate elements with the same or similar function. Although various aspects of embodiments are shown in the accompanying drawings, it is not necessary to draw the drawings to scale unless otherwise indicated.

In addition, in order to better illustrate the present disclosure, a number of specific details are given in specific implementations below. Those having skill in the art should understand that the present disclosure may also be implemented without certain specific details. In some examples, the methods, means, components, circuits and the like which are well known to those having skill in the art are not described in detail, so as to highlight the main purpose of the present disclosure.

The solution of the present disclosure provides a detection method for improving inspection efficiency of yarn spindles.

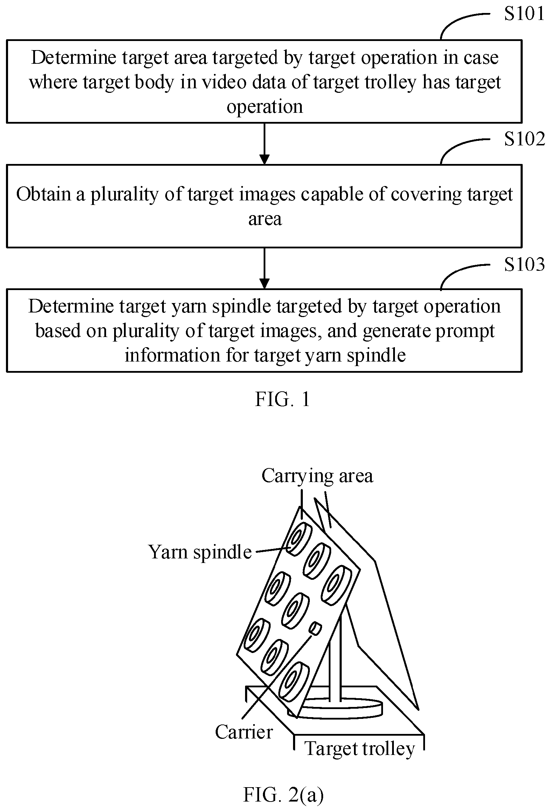

Specifically, FIG. 1 is a first schematic flowchart of a detection method according to an embodiment of the present application. The method may optionally be applied to electronic devices, such as PC, server, server cluster, and the like.

Furthermore, the method at least includes at least parts of following contents. As shown in FIG. 1, the method includes following steps.

At step S101, a target area targeted by a target operation is determined in a case where a target body in video data of a target trolley has the target operation.

Here, the target trolley includes two areas, each of the two areas has N (N is a positive integer) carriers for carrying yarn spindles. For example, in an example, as shown in FIG. 2(a), the target trolley is provided with carrying areas on both sides, and each carrying area is equipped with the carriers for carrying the yarn spindles, and each carrying area may carry 9 yarn spindles.

Furthermore, the target area targeted by the target operation is one of the two areas, for example, the two carrying areas.

Here, the video data of the target trolley is video data during movement or storage of the target trolley in a storage area. For example, in an example, the video data may be obtained in the following manner, specifically including: when the target trolley is detected to enter a starting location of the storage area, a plurality of image acquisition apparatuses located in the storage area are started to carry out video acquisition on the target trolley traveling in the storage area, and then the video data is obtained. It may be understood that the image acquisition apparatuses in the example may specifically include cameras, for example, for periodically carrying out the video acquisition on the carrying areas on the both sides of the target trolley located in the storage area to inspect whether there is the target operation, e.g., a target operation of removing a yarn spindle.

Alternatively, in another example, in a case where the target body is detected around a perimeter of the target trolley, the cameras are activated for carrying out the video acquisition on the both sides of the target trolley to detect whether there is the target operation.

At step S102, a plurality of target images capable of covering the target area is obtained.

For example, in an example, a plurality of video frames covering the target area is selected from the video data of the target trolley to obtain the plurality of target images.

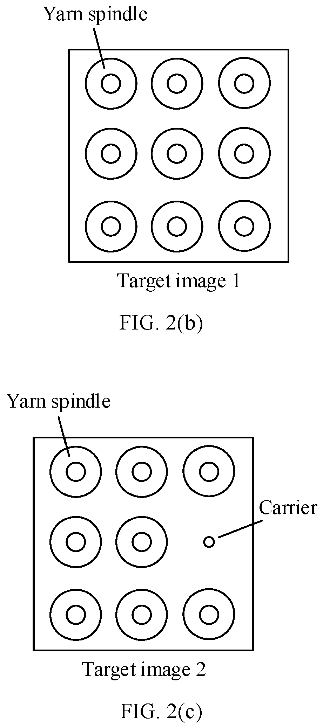

Here, it should be pointed out that the selected plurality of target images may reflect a whole process of the target operation carried out by the target body to the greatest extent, so that a yarn spindle targeted by the target operation may be accurately found in the future. For example, the selected plurality of target images (i.e., the plurality of video frames) contains images before and after the target operation. In other words, the plurality of target images may reflect a change condition of the yarn spindles before and after the target operation. For example, the selected plurality of target images contains at least a target image 1 (an image before the target operation) as shown in FIG. 2(b) and a target image 2 (an image after the target operation) as shown in FIG. 2(c).

At step S103, a target yarn spindle targeted by the target operation is determined based on the plurality of target images, and prompt information for the target yarn spindle is generated.

Here, in an example, the prompt information for the target yarn spindle includes, but is not limited to, at least one of identification information of the target trolley, location information of the target yarn spindle, identification information of the target yarn spindle and the like, so that it is convenient to timely prompt manual processing of an abnormality of the target trolley, so as to avoid affecting a subsequent packaging process of the yarn spindles.

In this way, the solution of the present disclosure may use the obtained plurality of target images to determine the target yarn spindle targeted by the target operation, and then generate the prompt information for the target yarn spindle, so that, compared with an existing manual inspection manner, the solution of the present disclosure does not need to rely on manual labor, may quickly determine specific information of the yarn spindle targeted by the target operation under the case where the target body has the target operation, improves the inspection efficiency, realizes automation and intelligence of whole processes, saves a large number of labor costs and time costs, avoids an impact on the subsequent packaging process, and ensures a normal operation of job shop.

In a specific example, an inductive component is arranged at the starting location (such as an entrance) of the storage area, and an image acquisition apparatus 1 and an image acquisition apparatus 2 are arranged in the storage area, where the inductive component is used for detecting whether the target trolley has reached the starting location, and the image acquisition apparatus 1 and the image acquisition apparatus 2 respectively carry out the video acquisition on the two carrying areas of the target trolley from different angles. For example, in an example, firstly, the inductive component sends a detection signal to a cloud (or a server) when it detects that the target trolley has reached the starting location of the storage area; secondly, the cloud responds to the detection signal, generates an acquisition signal and sends the acquisition signal to the image acquisition apparatus 1 and the image acquisition apparatus 2, so that the image acquisition apparatus 1 and the image acquisition apparatus 2 carry out the video acquisition on the two carrying areas of the target trolley from different angles; finally, after receiving video data collected by the image acquisition apparatus 1 and the image acquisition apparatus 2, and in a case where the target body (for example, a worker active in the storage area) is detected to have the target operation in the video data, the cloud determines a carrying area (i.e., the target area) targeted by the target operation, and then obtains the plurality of target images of the target area from the video data; at this time, the cloud may determine the target yarn spindle targeted by the target operation according to the obtained plurality of target images, and generate the prompt information.

In this way, the solution of the present disclosure may detect whether there is the target operation in real time, and under a case where it is determined that there is the target operation, quickly determine the target yarn spindle targeted by the target operation, and prompt a worker in time to avoid affecting the subsequent packaging process of the yarn spindles, so that the automation and intelligence of the whole processes are realized, and the normal operation of job shop is ensured.

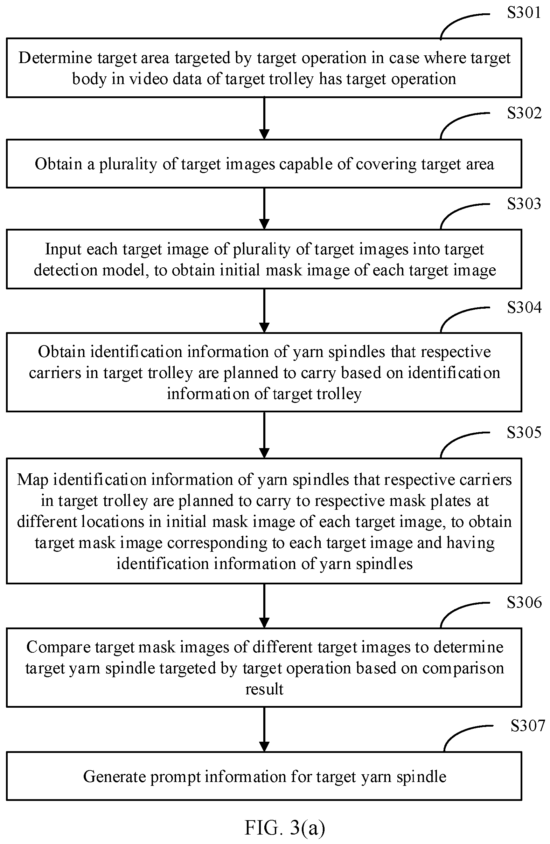

FIG. 3(a) is a second schematic flowchart of a detection method according to an embodiment of the present application. The method may optionally be applied to electronic devices, such as PC, server, server cluster, and the like. It is understandable that the relevant contents of the methods shown in FIG. 1 and FIG. 2 above may also be applied to this example, which will not be repeated in this example.

Furthermore, the method includes at least parts of following contents. As shown in FIG. 3(a), the method includes following steps.

At step S301, the target area targeted by the target operation is determined in the case where the target body in the video data of the target trolley has the target operation.

Here, the target trolley includes the two areas, each of the areas has N carriers for carrying the yarn spindles, the target area is one of the two areas; and N is a positive integer.

At step S302, the plurality of target images capable of covering the target area is obtained.

At step S303, each target image of the plurality of target images is input into a target detection model, to obtain an initial mask image of each target image.

Here, the target detection model is capable of identifying an area where each yarn spindle is located in the inputted image based on a preset yarn spindle prompt word, and using a mask plate to cover the area where each yarn spindle is located in the image to obtain a covered image.

At step S304, identification information of yarn spindles that respective carriers in the target trolley are planned to carry is obtained based on the identification information of the target trolley.

It should be pointed out that, in this example, the yarn spindles that the respective carriers in the target area of the target trolley are planned to carry may refer to yarn spindles placed on the respective carriers according to a preset placement rule (or sequence), that is, yarn spindles that the respective carriers need to carry theoretically. Based on this, after obtaining the identification information of the target trolley, the identification information of the yarn spindles theoretically carried by the respective carriers on the target trolley may be obtained, so that it provides strong support for subsequent rapid detection or rapid locking of specific problems.

Here, it should be noted that an execution order of the step S303 and the step S304 may be reversed or executed synchronously, which is not limited by the solution of the present disclosure.

At step S305, the identification information of the yarn spindles that the respective carriers in the target trolley are planned to carry is mapped to respective mask plates at different locations in the initial mask image of each target image, to obtain a target mask image corresponding to each target image and having the identification information of the yarn spindles.

Here, the target mask image corresponding to each target image and having the identification information of the yarn spindles is capable of representing identification information of respective yarn spindles actually included in the target image.

It should be pointed out that the "mapped" mentioned above may refer to adding the identification information of the yarn spindles to the carriers where the yarn spindles should theoretically be located based on the preset placement rule. Furthermore, since each yarn spindle in the mask image is covered by the mask plate, the "mapped" mentioned above may further refer to adding the identification information of the yarn spindles to the mask plates on the carriers where the yarn spindles should theoretically be located based on the preset placement rule.

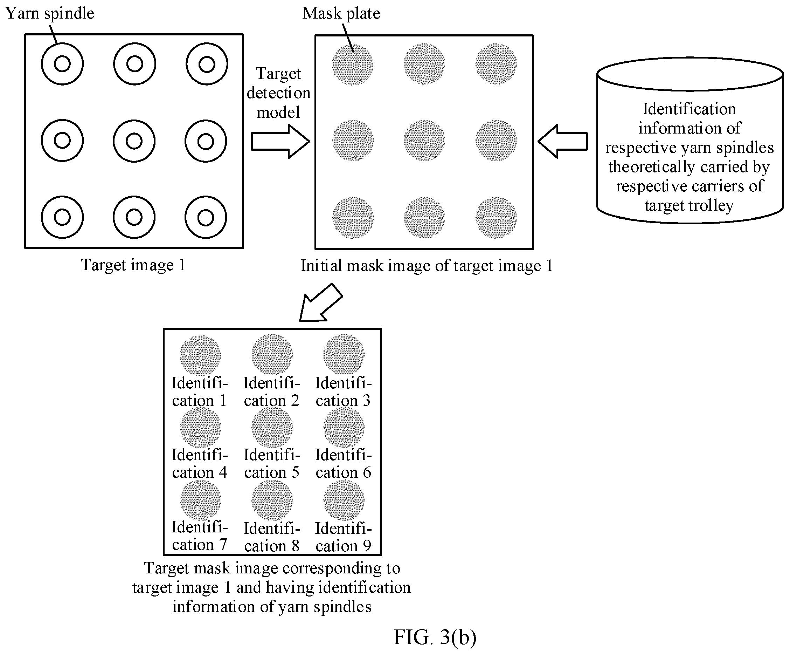

For example, as shown in FIG. 3(b), the target detection model is used to obtain the initial mask image in which the area where each yarn spindle is located in the target image 1 is covered by using the mask plate, and after obtaining the identification information of the yarn spindles theoretically carried by the respective carriers of the target trolley, the identification information of the yarn spindles is added to the mask plates at the carriers where the yarn spindles should theoretically be located in the initial mask image of the target image 1 based on the preset placement rule, so as to obtain the target mask image corresponding to the target image 1 and having the identification information of the yarn spindles.

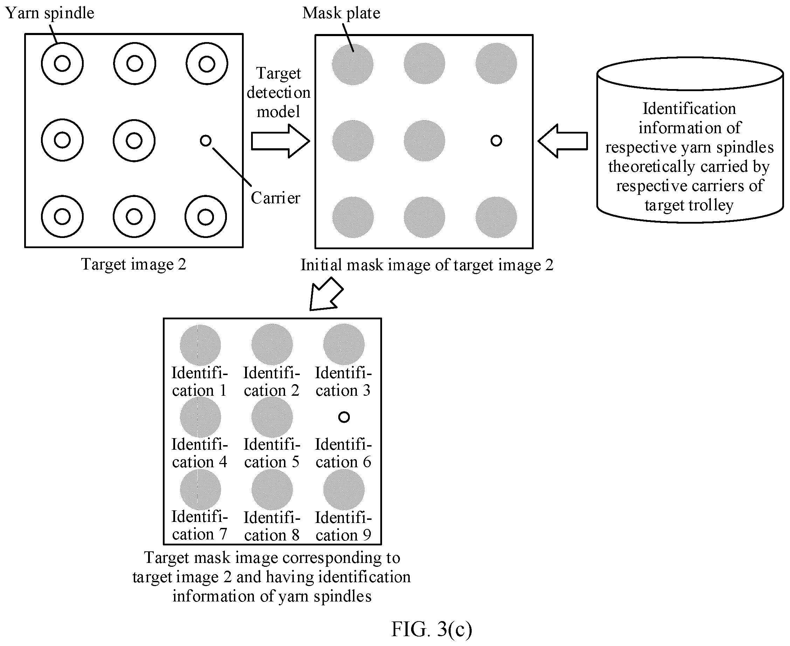

Furthermore, as shown in FIG. 3(c), the target detection model is used to obtain the initial mask image in which the area where each yarn spindle is located in the target image 2 is covered by using the mask plate, and after obtaining the identification information of the yarn spindles theoretically carried by the respective carriers of the target trolley, the identification information of the yarn spindles is added to the mask plates at the carriers where the yarn spindles should theoretically be located in the initial mask image of the target image 2 based on the preset placement rule, so as to obtain the target mask image corresponding to the target image 2 and having the identification information of the yarn spindles.

It should be noted that, as shown in FIG. 3(c), due to existence of a missing yarn spindle, correspondingly, there is no mask plate at the carrier where the missing yarn spindle is located in the initial mask image of the target image 2, and the identification information of the missing yarn spindle may be added to the carrier where the missing yarn spindle should theoretically be located in the initial mask image of the target image 2, so as to provide strong support for the subsequent rapid locking of the specific problems.

At step S306, target mask images of different target images are compared to determine the target yarn spindle targeted by the target operation based on a comparison result.

At step S307, the prompt information for the target yarn spindle is generated.

In this way, the solution of the present disclosure may firstly use the model to detect obtained images (such as the plurality of target images) to obtain the initial mask image of each target image, secondly map the identification information of the yarn spindles to the initial mask image of each target image to obtain the target mask image corresponding to each target image and having the identification information of the yarn spindles, and finally determine the target yarn spindle targeted by the target operation based on the comparison between the target mask images of different target images. The above-mentioned processes may determine the target yarn spindle targeted by the target operation without relying on manual labor, realize the automation and intelligence of the whole processes, and then save a lot of labor cost and time cost, and further ensure the normal operation of the subsequent job shop.

Furthermore, in a specific example, the target yarn spindle targeted by the target operation may be obtained in the following manner, specifically, comparing the target mask images of different target images to determine the target yarn spindle based on the comparison result, as described above (e.g., the step S306 as described above), specifically includes following steps.

At step S306-1, the target mask images of different target images are compared to determine a location where a carrier which does not carry a yarn spindle is located.

At step S306-2, the target yarn spindle targeted by the target operation is determined based on the location where the carrier which does not carry the yarn spindle is located.

For example, for the examples shown in FIG. 3(b) and FIG. 3(c), after comparing the target mask image of the target image 1 and the target mask image of the target image 2, it obtains that the target yarn spindle targeted by the target operation is a yarn spindle having identification information of "6".

In this way, the solution of the present disclosure can quickly determine relevant information (such as the identification information) of the yarn spindle targeted by the target operation by using a difference between the target mask images of different target images, and compared with the manual inspection manner in the prior art, the above processes may quickly determine the yarn spindle targeted by the target operation without relying on manual labor, thereby saving a large number of labor costs and time costs, and improving the inspection efficiency of the yarn spindle simultaneously.

Furthermore, in an example, the target detection model may be a Segment Anything Model (SAM) based on prior information, or another segmentation model having a mask image generation capability, which is not limited by the solution of the present disclosure.

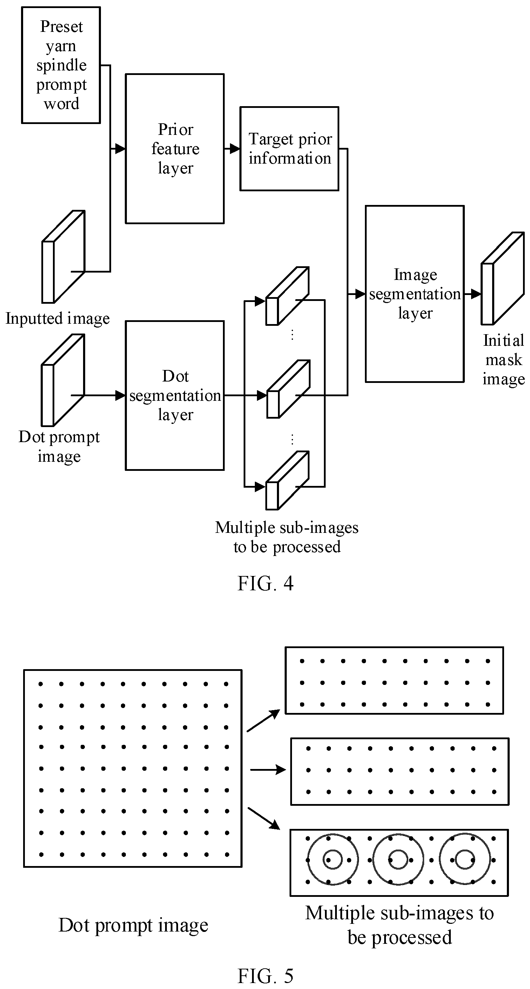

Furthermore, in an example, as shown in FIG. 4, the target detection model at least includes a prior feature layer, a dot segmentation layer and an image segmentation layer.

Specifically, in an example, the prior feature layer is configured to obtain target prior information based on the preset yarn spindle prompt word and the inputted image. The inputted image is one of the plurality of target images. Here, the target prior information may be used to guide the image segmentation layer to identify the yarn spindles, and segment areas where the yarn spindles are located, so as to enhance recognition and segmentation abilities of the image segmentation layer, and then generate a mask.

Furthermore, in another example, the dot segmentation layer is configured to segment a dot prompt image to obtain a plurality of sub-images to be processed indicating locations of dots; where the locations of the dots in different sub-images to be processed of the plurality of sub-images to be processed do not overlap with each other; the dot prompt image is obtained by processing the inputted image by using the dots. For example, as shown in FIG. 5, firstly, the inputted image, for example, the target image 1 shown in FIG. 3(b), is processed by using the dots, to obtain the dot prompt image corresponding to the target image 1; secondly, the obtained dot prompt image is segmented, for example, by rows to obtain the plurality of sub-images to be processed, and the dots of each sub-image to be processed do not overlap with each other, so that it is convenient to carry out batch image processing on each sub-image to be processed, meanwhile, it effectively avoids repeated recognition, and then lays a foundation for further improving recognition efficiency.

Furthermore, in another example, the image segmentation layer is configured to identify yarn spindles in each sub-image to be processed based on the target prior information, segment an area where each yarn spindle is located, and then use the mask plate to cover the area where each yarn spindle is located in each sub-image to be processed to obtain a sub mask image of each sub-image to be processed. Furthermore, after obtaining the sub mask image of each sub-image to be processed, the initial mask image of the inputted image may be obtained based on the sub mask image of each sub-image to be processed, for example, by splicing the sub mask image of each sub-image to be processed.

In this way, the solution of the present disclosure can use the target prior information to enhance the recognition and segmentation abilities of the image segmentation layer, and meanwhile, can also realize the batch image processing based on the dot prompt image, thereby improving segmentation efficiency, so as to provide strong support for automatically and intelligently obtaining the yarn spindle targeted by the target operation, and also provide strong support for improving the inspection efficiency.

In a specific example of the solution of the present disclosure, the prior feature layer at least includes a semantic prior layer and a similarity map prior layer.

Here, in an example, the semantic prior layer is configured to obtain a semantic prior feature at least based on a yarn spindle feature corresponding to the preset yarn spindle prompt word, for example, in an example, the yarn spindle feature corresponding to the preset yarn spindle prompt word may be directly taken as the semantic prior feature.

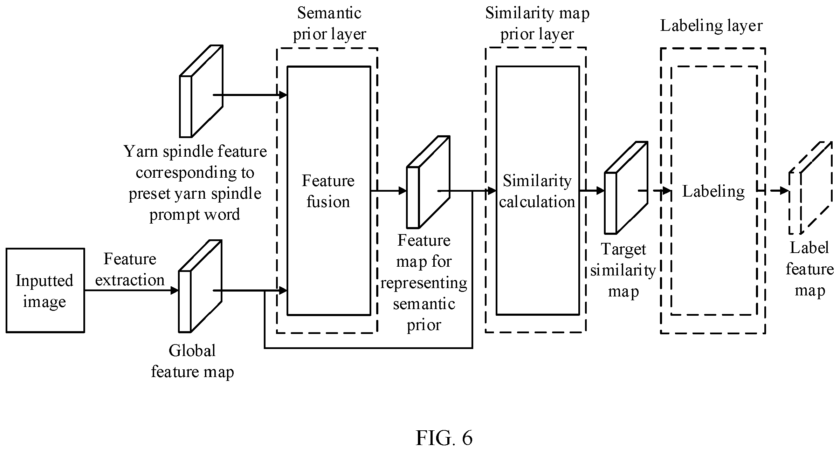

Furthermore, in another example, the semantic prior layer may also obtain the semantic prior feature in the following manner. Specifically, as shown in FIG. 6, the semantic prior layer is specifically configured to perform feature fusion on the yarn spindle feature corresponding to the preset yarn spindle prompt word and an image feature of the inputted image (for example, a global feature map of the inputted image) to obtain a feature map (i.e., the semantic prior feature) for representing semantic prior. For example, the yarn spindle feature corresponding to the preset yarn spindle prompt word is multiplied with the image feature of the inputted image element by element to obtain the feature map for representing semantic prior.

It should be noted that in this example, if a dimension of the yarn spindle feature corresponding to the preset yarn spindle prompt word is inconsistent with a dimension of the image feature of the inputted image, an up-sampling process (such as a bilinear interpolation process) needs to be performed on the yarn spindle feature corresponding to the preset yarn spindle prompt word, so that a dimension of the processed yarn spindle feature is the same as that of the image feature of the inputted image, and then the two features are fused. In this way, feature information of the obtained semantic prior feature is richer, which provides a strong support for further enhancing the recognition and segmentation abilities of the image segmentation layer.

Furthermore, in another example, the similarity map prior layer is configured to estimate the area where each yarn spindle is located in the inputted image based on a similarity between the yarn spindle feature corresponding to the preset yarn spindle prompt word and the image feature of the inputted image, so as to obtain a target similarity map.

Here, it should be noted that the target prior information includes the semantic prior feature and the target similarity map.

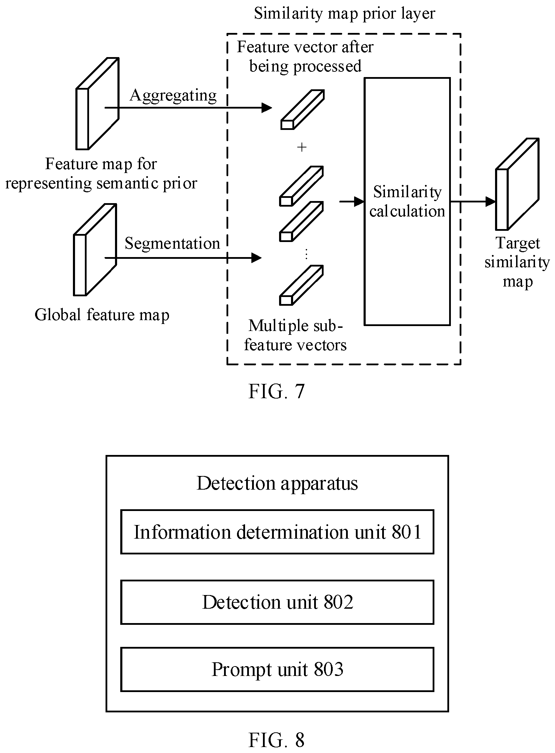

Furthermore, in an example, the similarity map prior layer may determine the target similarity map in the following manner. Specifically, the similarity map prior layer is specifically configured to estimate the area where each yarn spindle is located in the inputted image based on the similarity of the obtained semantic prior feature and the image feature of the inputted image, so as to obtain the target similarity map. For example, as shown in FIGS. 6 and 7, it is specifically used to:
aggregate the obtained semantic prior feature to obtain an aggregated semantic prior feature, for example, pixel values of feature vectors representing the semantic prior feature are summed (or averaged or the like) column by column to obtain a feature vector after aggregating;
obtain a plurality of sub-feature vectors of the global feature map of the inputted image, for example, in an example, feature vectors representing the global feature map are segmented, for example, row by row, to obtain the plurality of sub-feature vectors, and a dimension of each of the obtained sub-feature vectors is the same as a dimension of the feature vector after aggregating, so that similarity of both is convenient for calculation; and
obtain the similarity between each sub-feature vector of the plurality of sub-feature vectors and the feature vector after aggregating, and obtain the target similarity map based on the similarity.

In this way, the area where the yarn spindle is located in the inputted image can be accurately determined, which lays a foundation for subsequent accurate identification and separation of the yarn spindles in the image and the obtaining of the mask image.

Furthermore, in an example, the prior feature layer may also include a feature enhancement layer, for example, the obtained target similarity map is inputted to the feature enhancement layer to carry out feature enhancement on the target similarity map to obtain a target similarity map after feature enhancement, and meanwhile, the image segmentation layer may specifically perform identification and segmentation based on the semantic prior feature and the target similarity map after feature enhancement, so that accuracy of image recognition and segmentation is further improved.

Alternatively, in another example, the prior feature layer may also include a labeling layer, for example, as shown in FIG. 6, the obtained target similarity map (or the target similarity map after feature enhancement) is inputted to the labeling layer to label the inputted target similarity map to obtain a label feature map, and meanwhile, the target prior information may specifically include the semantic prior feature and the label feature map.

Here, in the label feature map (for example, using "0" and "1" for labeling), if a value of an area is 1, it means that the area is a positive area, that is, in which there is a yarn spindle or a part of the yarn spindle, otherwise it is a negative area, so that the image segmentation layer is convenient to focus on segmenting the positive area, and ignores the negative area, so that the recognition and segmentation abilities for the yarn spindles are further enhanced, and then it is convenient to identify and separate the yarn spindles in the image more accurately, and at the same time, recognition and segmentation efficiency is also effectively improved.

It should be pointed out that the prior feature layer described above may include the feature enhancement layer or the labeling layer, or include both the feature enhancement layer and the labeling layer, or may also include another processing layer for improving the image recognition and segmentation abilities, and in practical applications, it can be set according to actual needs, which is not specifically limited by the solution of the present disclosure.

In this way, the solution of the present disclosure can use the semantic prior feature in the target prior information and the target similarity map to improve image recognition and segmentation abilities of the image segmentation layer, so that the image segmentation layer can better focus on the recognition and segmentation of the yarn spindles in the image, so that recognition accuracy and recognition efficiency are effectively improved.

The solution of the present disclosure further provides a detection apparatus applied to a cloud, as shown in FIG. 8, the apparatus includes:
an information determination unit 801 configured to determine a target area targeted by a target operation in a case where a target body in video data of a target trolley has the target operation, and obtain a plurality of target images capable of covering the target area, where the target trolley includes two areas, each of the two areas has N carriers for carrying yarn spindles, the target area is one of the two areas, and N is a positive integer;
a detection unit 802 configured to determine a target yarn spindle targeted by the target operation based on the plurality of target images; and
a prompt unit 803 configured to generate prompt information for the target yarn spindle.

In a specific example of the solution of the present disclosure, the detection unit is specifically configured to:
input each target image of the plurality of target images into a target detection model which is capable of identifying an area where each yarn spindle is located in the inputted image based on a preset yarn spindle prompt word, to obtain an initial mask image of each target image, and use a mask plate to cover the area where each yarn spindle is located in the image to obtain a covered image;
obtain identification information of yarn spindles that respective carriers in the target trolley are planned to carry based on identification information of the target trolley;
map the identification information of the yarn spindles that the respective carriers in the target trolley are planned to carry to respective mask plates at different locations in the initial mask image of each target image, to obtain a target mask image corresponding to each target image and having the identification information of the yarn spindles, where the target mask image corresponding to each target image and having the identification information of the yarn spindles is capable of representing identification information of respective yarn spindles actually included in the target image; and
compare target mask images of different target images to determine the target yarn spindle targeted by the target operation based on a comparison result.

In a specific example of the solution of the present disclosure, the detection unit is specifically configured to:
compare the target mask images of different target images to determine a location where a carrier which does not carry a yarn spindle is located; and
determine the target yarn spindle targeted by the target operation based on the location where the carrier which does not carry the yarn spindle is located.

In a specific example of the solution of the present disclosure, the target detection model at least includes a prior feature layer, a dot segmentation layer and an image segmentation layer;

the prior feature layer is configured to obtain target prior information based on the preset yarn spindle prompt word and the inputted image, the inputted image is one of the plurality of target images;
the dot segmentation layer is configured to segment a dot prompt image to obtain a plurality of sub-images to be processed indicating locations of dots, where the locations of the dots in different sub-images to be processed of the plurality of sub-images to be processed do not overlap with each other, and the dot prompt image is obtained by processing the inputted image by using the dots; and
the image segmentation layer is configured to identify yarn spindles in each sub-image to be processed based on the target prior information, cover the area where each yarn spindle is located in the sub-image to be processed by using the mask plate, to obtain a sub mask image of each sub-image to be processed, and obtain the initial mask image of the inputted image based on the sub mask image of each sub-image to be processed.

In a specific example of the solution of the present disclosure, the prior feature layer at least includes a semantic prior layer and a similarity map prior layer;
the semantic prior layer is configured to obtain a semantic prior feature at least based on a yarn spindle feature corresponding to the preset yarn spindle prompt word; and
the similarity map prior layer is configured to estimate the area where each yarn spindle is located in the inputted image based on a similarity between the yarn spindle feature corresponding to the preset yarn spindle prompt word and an image feature of the inputted image, so as to obtain a target similarity map.

Here, the target prior information includes the semantic prior feature and the target similarity map.

In a specific example of the solution of the present disclosure, the semantic prior layer is specifically configured to: perform feature fusion on the yarn spindle feature corresponding to the preset yarn spindle prompt word and the image feature of the inputted image to obtain the semantic prior feature.

In a specific example of the solution of the present disclosure, the similarity map prior layer is specifically configured to:
estimate the area where each yarn spindle is located in the inputted image based on a similarity of the obtained semantic prior feature and the image feature of the inputted image, so as to obtain the target similarity map.

The descriptions to specific functions and examples of each unit of the apparatus according to the embodiments of the present disclosure may refer to the relevant descriptions to the corresponding steps in the above method embodiments, which will not be repeated herein.

In the technical solution of the present disclosure, acquisition, storage and application of the user's personal information involved are all in compliance with provisions of relevant laws and regulations, and do not violate public order and good customs.

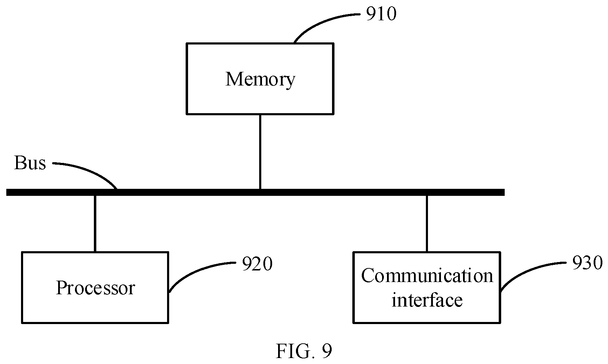

FIG. 9 is a block diagram of an electronic device according to an embodiment of the present disclosure. As shown in FIG. 9, the electronic device includes a memory 910 and a processor 920, a computer program capable of being run on the processer 920 is stored in the memory 910. The number of each of the memory 910 and processor 920 may be one or more. The memory 910 may store one or more computer programs, which, when the one or more computer programs are executed by the electronic device, cause the electronic device performs the method provided in the above method embodiments. The electronic device may also include a communication interface 930 configured to communicate with an external device for carrying out data interactive transmission.

If the memory 910, the processor 920 and the communication interface 930 are implemented independently, the memory 910, the processor 920 and the communication interface 930 may be connected to each other and complete communication with each other through a bus. The bus may be an Industry Standard Architecture (ISA) bus, a Peripheral Component Interconnect (PCI) bus, an Extended Industry Standard Architecture (EISA) bus or the like. The bus may be divided into an address bus, a data bus, a control bus and the like. For ease of representation, the bus is shown by only one thick line in FIG. 9, which does not mean that there is only one bus or one type of bus.

Alternatively, in specific implementation, if the memory 910, the processor 920 and the communication interface 930 are integrated on one chip, the memory 910, the processor 920 and the communication interface 930 may complete communication with each other through internal interfaces.

It should be understood that the above processor may be a central processing unit (CPU), or may be another general-purpose processor, a digital signal processing (DSP), an application specific integrated circuit (ASIC), a field programmable gate array (FPGA) or another programmable logic device, a discrete gate or a transistor logic device, a discrete hardware component, or the like. The general-purpose processor may be a microprocessor or any conventional processor, etc. It is worth noting that the processor may be a processor that supports the Advanced RISC Machines (ARM) architecture.

Furthermore, alternatively, the above memory may include a read-only memory and a random access memory, and may also include a non-volatile random access memory. The memory may be either a volatile memory or a non-volatile memory, or it may include both the volatile and non-volatile memories. Where the non-volatile memory may include a read-only memory (ROM), a programmable ROM (PROM), an erasable programmable PROM (EPROM), an electrically erasable programmable ROM (EEPROM), or a flash memory. The volatile memory may include a random access memory (RAM), which is used as an external cache. With illustrative but not restrictive illustrations, many forms of RAM are available, for example, a static RAM (SRAM), a dynamic ROM (DRAM), a synchronous DRAM (SDRAM), a double data date SDRAM (DDR SDRAM), an enhanced SDRAM (ESDRAM), a Synchlink DRAM (SLDRAM) and a direct RAMBUS RAM (DR RAM).

In the above embodiments, it may be realized in whole or in part by software, hardware, firmware, or any combination thereof. When implemented using software, it may be implemented in whole or in part in a form of a computer program product. The computer program product includes one or more computer instructions. When the computer instructions are loaded and executed on a computer, a process or function described in the embodiments of the present disclosure is produced in whole or in part. The computer may be a general-purpose computer, a specialized computer, a computer network, or another programmable apparatus. The computer instructions may be stored in a computer-readable storage medium, or transmitted from a computer-readable storage medium to another computer-readable storage medium, for example, the computer instructions may be transmitted from a website site, computer, server or data center to another website site, computer, computer, server or data center by a wired (e.g., coaxial cable, optical fiber, data subscriber line (DSL)) or wireless (e.g., infrared, Bluetooth, microwave, etc.) manner. The computer-readable storage medium may be any available medium that the computer can access, or may be a data storage device such as a server, a data center, etc., which is integrated with one or more available medium. The available medium may be magnetic medium (e.g., floppy disk, hard disk, magnetic tape), optical medium (e.g., digital versatile disc (DVD)) or semiconductor medium (e.g., solid state disk (SSD)) and the like. It should note that the computer-readable storage medium referred to in the present disclosure may be non-volatile storage medium, in other words, non-transient storage medium.

Those having ordinary skills in the art may understand that all or part of the steps to realize the above embodiment may be completed by hardware, or by instructing related hardware by a program, and the program may be stored in a computer-readable storage medium, and the storage medium mentioned above may be a read-only memory, a disk or an optical disc, etc.

In descriptions to the embodiments of the present disclosure, descriptions referring to terms "an embodiment", "some embodiments", "an example", "a specific example", or "some examples" or the like mean that specific features, structures, materials, or features described in the embodiment(s) or example(s) are included in at least one embodiment or example of the present disclosure. Furthermore, the specific features, structures, materials, or features described may be combined in an appropriate manner in any one or more embodiments or examples. In addition, without contradicting each other, those having skills in the art may combine and integrate different embodiments or examples described in this Description and features of the different embodiments or examples.

In the descriptions to the embodiments of the present disclosure, unless otherwise indicated, "/" means "or", for example, A/B may mean A or B. The word "and/or" herein is merely an associated relationship for describing associated objects, which indicates that there may be three kinds of relationships, for example, A and/or B may means that there are three cases: A alone, both A and B, and B alone.

In the descriptions to the embodiments of the present disclosure, terms "first" and "second" are used only for a descriptive purpose and should not be construed as indicating or implying relative importance or implying the number of technical features indicated. Thus, features defined with the terms "first" and "second" may explicitly or implicitly include one or more of these features. In the descriptions to the embodiments of the present disclosure, unless otherwise specified, "a/the plurality of" means two or more of them.

The foregoing is only exemplary embodiments of the present disclosure and is not intended to limit the present disclosure, and any modifications, equivalent substitutions, improvements and the like made within the principle of the present disclosure shall be included in the protection scope of the present disclosure.

## Claims

1. A detection method, applied to a cloud, **characterized by** comprising:
determining (S101, S301) a target area targeted by a target operation in a case where a target body in video data of a target trolley has the target operation, wherein the target trolley comprises two areas, each of the two areas has N carriers for carrying yarn spindles, the target area is one of the two areas, and N is a positive integer;
obtaining (S102, S302) a plurality of target images capable of covering the target area;
determining (S103) a target yarn spindle targeted by the target operation based on the plurality of target images; and
generating (S103, S307) prompt information for the target yarn spindle.

2. The method of claim 1, wherein determining the target yarn spindle targeted by the target operation based on the plurality of target images comprises:
inputting (S303) each target image of the plurality of target images into a target detection model which is capable of identifying an area where each yarn spindle is located in the inputted image based on a preset yarn spindle prompt word, to obtain an initial mask image of each target image, and using a mask plate to cover the area where each yarn spindle is located in the image to obtain a covered image;
obtaining (S304) identification information of yarn spindles that respective carriers in the target trolley are planned to carry based on identification information of the target trolley;
mapping (S305) the identification information of the yarn spindles that the respective carriers in the target trolley are planned to carry to respective mask plates at different locations in the initial mask image of each target image, to obtain a target mask image corresponding to each target image and having the identification information of the yarn spindles, wherein the target mask image corresponding to each target image and having the identification information of the yarn spindles is capable of representing identification information of respective yarn spindles actually included in the target image; and
comparing (S306) target mask images of different target images to determine the target yarn spindle targeted by the target operation based on a comparison result.

3. The method of claim 2, wherein comparing (S306) the target mask images of different target images to determine the target yarn spindle targeted by the target operation based on the comparison result comprises:
comparing the target mask images of different target images to determine a location where a carrier which does not carry a yarn spindle is located; and
determining the target yarn spindle targeted by the target operation based on the location where the carrier which does not carry the yarn spindle is located.

4. The method of claim 2 or 3, wherein the target detection model at least comprises a prior feature layer, a dot segmentation layer and an image segmentation layer,
the prior feature layer is configured to obtain target prior information based on the preset yarn spindle prompt word and the inputted image, the inputted image is one of the plurality of target images;
the dot segmentation layer is configured to segment a dot prompt image to obtain a plurality of sub-images to be processed indicating locations of dots, wherein the locations of the dots in different sub-images to be processed of the plurality of sub-images to be processed do not overlap with each other, and the dot prompt image is obtained by processing the inputted image by using the dots; and
the image segmentation layer is configured to identify yarn spindles in each sub-image to be processed based on the target prior information, cover the area where each yarn spindle is located in the sub-image to be processed by using the mask plate, to obtain a sub mask image of each sub-image to be processed, and obtain the initial mask image of the inputted image based on the sub mask image of each sub-image to be processed.

5. The method of claim 4, wherein the prior feature layer at least comprises a semantic prior layer and a similarity map prior layer,
the semantic prior layer is configured to obtain a semantic prior feature at least based on a yarn spindle feature corresponding to the preset yarn spindle prompt word; and
the similarity map prior layer is configured to estimate the area where each yarn spindle is located in the inputted image based on a similarity between the yarn spindle feature corresponding to the preset yarn spindle prompt word and an image feature of the inputted image, so as to obtain a target similarity map;
the target prior information comprises the semantic prior feature and the target similarity map.

6. The method of claim 5, wherein the semantic prior layer is specifically configured to perform feature fusion on the yarn spindle feature corresponding to the preset yarn spindle prompt word and the image feature of the inputted image to obtain the semantic prior feature.

7. The method of claim 5, wherein the similarity map prior layer is specifically configured to estimate the area where each yarn spindle is located in the inputted image based on a similarity of the obtained semantic prior feature and the image feature of the inputted image, so as to obtain the target similarity map.

8. A detection apparatus, applied to a cloud, **characterized by** comprising:
an information determination unit (801) configured to determine a target area targeted by a target operation in a case where a target body in video data of a target trolley has the target operation, and obtain a plurality of target images capable of covering the target area, wherein the target trolley comprises two areas, each of the two areas has N carriers for carrying yarn spindles, the target area is one of the two areas, and N is a positive integer;
a detection unit (802) configured to determine a target yarn spindle targeted by the target operation based on the plurality of target images; and
a prompt unit (803) configured to generate prompt information for the target yarn spindle.

9. The apparatus of claim 8, wherein the detection unit (802) is configured to:
input each target image of the plurality of target images into a target detection model which is capable of identifying an area where each yarn spindle is located in the inputted image based on a preset yarn spindle prompt word, to obtain an initial mask image of each target image, and use a mask plate to cover the area where each yarn spindle is located in the image to obtain a covered image;
obtain identification information of yarn spindles that respective carriers in the target trolley are planned to carry based on identification information of the target trolley;
map the identification information of the yarn spindles that the respective carriers in the target trolley are planned to carry to respective mask plates at different locations in the initial mask image of each target image, to obtain a target mask image corresponding to each target image and having the identification information of the yarn spindles, wherein the target mask image corresponding to each target image and having the identification information of the yarn spindles is capable of representing identification information of respective yarn spindles actually included in the target image; and
compare target mask images of different target images to determine the target yarn spindle targeted by the target operation based on a comparison result.

10. The apparatus of claim 9, wherein the detection unit (802) is configured to:
compare the target mask images of different target images to determine a location where a carrier which does not carry a yarn spindle is located; and
determine the target yarn spindle targeted by the target operation based on the location where the carrier which does not carry the yarn spindle is located.

11. The apparatus of claim 9 or 10, wherein the target detection model at least comprises a prior feature layer, a dot segmentation layer and an image segmentation layer,
the prior feature layer is configured to obtain target prior information based on the preset yarn spindle prompt word and the inputted image, the inputted image is one of the plurality of target images;
the dot segmentation layer is configured to segment a dot prompt image to obtain a plurality of sub-images to be processed indicating locations of dots, wherein the locations of the dots in different sub-images to be processed of the plurality of sub-images to be processed do not overlap with each other, and the dot prompt image is obtained by processing the inputted image by using the dots; and
the image segmentation layer is configured to identify yarn spindles in each sub-image to be processed based on the target prior information, cover the area where each yarn spindle is located in the sub-image to be processed by using the mask plate, to obtain a sub mask image of each sub-image to be processed, and obtain the initial mask image of the inputted image based on the sub mask image of each sub-image to be processed.

12. The apparatus of claim 11, wherein the prior feature layer at least comprises a semantic prior layer and a similarity map prior layer,
the semantic prior layer is configured to obtain a semantic prior feature at least based on a yarn spindle feature corresponding to the preset yarn spindle prompt word; and
the similarity map prior layer is configured to estimate the area where each yarn spindle is located in the inputted image based on a similarity between the yarn spindle feature corresponding to the preset yarn spindle prompt word and an image feature of the inputted image, so as to obtain a target similarity map;
the target prior information comprises the semantic prior feature and the target similarity map.

13. The apparatus of claim 12, wherein the semantic prior layer is specifically configured to perform feature fusion on the yarn spindle feature corresponding to the preset yarn spindle prompt word and the image feature of the inputted image to obtain the semantic prior feature;
wherein the similarity map prior layer is specifically configured to estimate the area where each yarn spindle is located in the inputted image based on a similarity of the obtained semantic prior feature and the image feature of the inputted image, so as to obtain the target similarity map.

14. A non-transitory computer-readable storage medium storing a computer instruction thereon, wherein the computer instruction is used to cause a computer to execute the method of any one of claims 1 to 7.

15. A computer program product comprising a computer program, wherein the computer program, when executed by a processor, implements the method of any one of claims 1 to 7.
